# EUROPEAN PATENT SPECIFICATION

(11) **EP 0 653 168 B1**
(45) Date of publication and mention of the grant of the patent: **15.01.1997**
(21) Application number: 93307568.1
(22) Date of filing: 24.09.1993
(51) Int. Cl.: A23L 1/325, A23B 4/06, A23B 4/023, A23B 4/044

(54) **Process for the preparation of sliced fish products**
Verfahren zur Herstellung von geschnittenen Fischprodukten
Procédé de fabrication de tranches de poissons

(43) Date of publication of application: 17.05.1995
(73) Proprietor: UNILEVER PLC, London EC4P 4BQ (GB); UNILEVER N.V., 3013 AL Rotterdam (NL)
(72) Inventor: Domanski, Gerd, D-27574 Bremerhaven (DE); de Nuzzi, Lucio, D-27637 Nordholz (DE); Rogge, Dietke, D-27580 Bremerhaven (DE)
(74) Representative: Kirsch, Susan Edith

(56) References cited:
- DE-A- 3 402 611
- DE-B- 1 202 111
- FR-A- 2 106 170
- GB-A- 1 126 644
- US-A- 3 897 573

## Description

### TECHNICAL FIELD OF THE INVENTION

A process for the efficient preparation of a sliced fish product having a uniform size and having a consistently uniform salt content.

### BACKGROUND TO THE INVENTION AND PRIOR ART

Sliced fish products for example "Seelachs slices" are currently manufactured from large (Grade I/II) fish fillets having a weight of greater than 3.0 kg and preferably a weight of greater than 4.5 kg. These fish fillets are salted at 10°C for 3 to 4 weeks until the salt concentration contained in the cell water of the fish is from 22 to 26%. Generally the ratio of salt:fish used is 1:2 (w/w). The fish are then washed and the belly flaps removed before cutting into suitable lengths. These lengths are then sliced, coloured and desalted, smoked, dried and packaged.

However, this process has many disadvantages, for example it is becoming increasingly difficult to obtain fish fillets of a suitable size, the salt concentration of the final sliced product may vary largely within each fish slice, and the yield is very poor.

It is therefore highly desirable to be able to manufacture a product of a similar or higher quality using a process which does not have these problems.

GB 1 387 117 (Unilever Ltd) describes a process for the preparation of slices of fish comprising:
(a) contacting the raw fish fillets with salt to provide salted fish fillets containing from 3 to 20% salt expressed on a weight basis;
(b) coating the salted fillets with 5 to 50% by weight of a binder comprising finely divided substantially bone-free raw fish muscle mixed with from 1 to 10% salt, and from 3 to 8% food grade phosphate; and
(c) moulding the binder-coated fillets to form integral blocks of uniform weight shape and size.

We have, however, now surprisingly discovered that it is possible to form blocks of fish fillets which adhere sufficiently well together without the requirement to salt the fillets prior to freezing and also without the requirement to provide a binder. Thus a much simpler process for providing high quality fish slices is disclosed which enables fish fillets having a uniform salt concentration to be produced with minimum waste. The fish fillets may also be sourced from smaller fish than the conventional process. It is essential, however, that the fish fillets are deep-skinned prior to being frozen into the fish block. By deep-skinned is meant that all the brown flesh from underneath the skin is removed. Such a deep-skinning process is essential in order to provide a sliced product which adheres together without the requirement for binder and is of the required high quality.

### DISCLOSURE OF THE INVENTION

Accordingly the invention discloses a process for the preparation of a sliced fish product comprising:
(a) freezing fish fillets from the Gadus family into a block of uniform shape wherein the fish fillets are deep-skinned prior to freezing into the block;
(b) salting the block such that a salt concentration of from 22 to 26% is obtained within the fish cell water;
(c) slicing; and
(d) desalting the fish slices to a salt concentration of from 8 to 10%.

As mentioned above this process is particularly advantageous for, but not limited to, the production of the product "Seelachs slices". This is a smoked saithe (sea/rock/mock salmon) slice, wherein the sliced fish is coloured and smoked prior to packaging. It is therefore preferred that the process additionally includes a colouring step and/or a smoking step.

The desalting and colouring step may occur simultaneously, for example by passing the slices through a large vat of colourant. Preferably a colour concentration within the fish slice of 250 mg/kg is achieved.

Preferably a salt concentration of from 8 to 9% is achieved by de-salting, most preferably a salt concentration of approximately 8% is achieved. One clear advantage of this process over the conventional process mentioned above is that the final concentration of salt can be closely determined, and slices having consistently uniform salt concentration can therefore be achieved.

A final salt concentration of less than 8% provides the sliced product with a poor shelf life stability, whereas a final salt concentration of greater than 10% is perceived as being too salty in taste by the consumer.

In order to obtain a higher quality final product it is preferred to freeze the deep-skinned fish fillets in the same orientation.

The salting process is preferably carried out such that the ratio of fish to salt is 1:2. Furthermore, this process can conveniently be conducted at ambient temperature using the frozen deep-skinned fish fillet blocks. The salting process preferably achieves a salt concentration of 26% in the fish cell water.

As mentioned above, the fish may be any member of the Gadus family, for example, saithe, cod, haddock, hake, Alaskan pollock, codling, whiting, blue whiting, coal fish, ling cod, blue ling, tusk, burbot. Preferably the fish is saithe.

### EXAMPLES

The invention is illustrated with the following examples:

### Example 1

Saithe was filleted and deep-skinned to remove all the brown coloured flesh below the skin, prior to freezing the thus prepared fillets into blocks having the dimension 254x482x62.5 mm.

The frozen deep-skinned saithe fillet blocks were then placed in salt in the ratio 1:2 (fish block:salt) and stored at ambient temperature for greater than 22 days in order that the salt content of the fish cell water reached 26%. The excess salt was then washed off the fish block and the block cut into smaller blocks having the dimension 63.1x62.5x96.0 mm.

The smaller blocks were sliced and then desalted to a salt content of 8% and coloured simultaneously.

The desalt/colour solution comprised:

| | |
|---|---|
| 30% sea salt solution | 300,000 litres |
| 10% solution vinegar | 60,000 litres |
| GIV 88173 colourant | 3,000 kg |
| Apple acid | 2,250 kg |
| Preservative | 9,000 kg |
| Water to | 3,000,000 litres |

The slices were then smoked, dried and packaged.

Good quality, uniform sized slices were achieved with uniform salt and colour concentration.

### Comparative Example A

Example 1 was repeated except the saithe was not deep-skinned before being frozen into blocks.

Poor quality slices having a uniform size were obtained. The slices fell apart easily and did not have a uniform salt concentration.

### Comparative Example B

Example 1 was repeated except the saithe fillets were not frozen into a block but treated as individual fillets. The fillets were salted for 3 weeks at 10°C. The ratio of fish:salt was 2:1. The fillets were then washed, cut into 9 cm lengths and sliced. The slices were treated as for Example 1.

The slices were not of uniform size. The salt concentration varied from 6 to 12% in the final product. A large proportion of the fish fillet was wasted due to the irregular size of the fillet.

## Claims

1. A process for the preparation of a sliced fish product comprising:
(a) freezing fish fillets from the Gadus family into a block of uniform shape wherein the fish fillets are deep-skinned prior to freezing into the block;
(b) salting the block such that a salt concentration of from 22 to 26% is obtained within the fish cell water;
(c) slicing; and
(d) desalting the fish slices to a salt concentration of from 8 to 10%.

2. A process according to claim 1 wherein the fish slices are additionally coloured.

3. A process according to claim 1 or 2 wherein the fish slices are additionally smoked.

4. A process according to claim 1 and claim 2 wherein the desalting and colouring steps are conducted simultaneously.

5. A process according to any preceding claim wherein the fish slices are desalted to a salt concentration of from 8 to 9%.

6. A process according to any preceding claim wherein the fish slices are desalted to a salt concentration of approximately 8%.

7. A process according to any preceding claim wherein the deep-skinned fish fillets are frozen such that the fillets are orientated in the same direction.

8. A process according to any preceding claim wherein the ratio of fish to salt used during the salting step (b) is approximately 1:2.

9. A process according to any preceding claim wherein the salting step (b) is conducted at ambient temperature.

10. A process according to any preceding claim wherein the fish is saithe.

## Patentansprüche

1. Verfahren zur Herstellung eines geschnittenen Fischprodukts, welches umfaßt:
(a) Einfrieren von Fischfilets der Gadus-Familie in einen Block mit gleichmäßiger Form, wobei die Fischfilets vor dem Einfrieren in den Block gründlich gehäutet werden;
(b) Einsalzen des Blocks, so daß eine Salzkonzentration von 22 bis 26 % innerhalb des Fischzellwassers erhalten wird;
(c) Schneiden in Stücke; und
(d) Entsalzen der Fischstücke auf eine Salzkonzentration von 8 bis 10 %.

2. Verfahren nach Anspruch 1, bei welchem die Fischstücke zusätzlich gefärbt werden.

3. Verfahren nach Anspruch 1 oder 2, bei welchem die Fischstücke zusätzlich geräuchert werden.

4. Verfahren nach Anspruch 1 und 2, bei welchem der Entsalzungs- und Färbeschritt gleichzeitig durchgeführt werden.

5. Verfahren nach einem der vorhergehenden Ansprüche, bei welchem die Fischstücke auf eine Salzkonzentration von 8 bis 9 % entsalzt werden.

6. Verfahren nach einem der vorhergehenden Ansprüche, bei welchem die Fischstücke auf eine Salzkonzentration von ungefähr 8 % entsalzt werden.

7. Verfahren nach einem der vorhergehenden Ansprüche, bei welchem die gründlich gehäuteten Fischfilets derart eingefroren werden, daß die Filets in dieselbe Richtung ausgerichtet sind.

8. Verfahren nach einem der vorhergehenden Ansprüche, bei welchem das Verhältnis von Fisch zu während des Einsalzschritts (b) verwendetem Salz ungefähr 1:2 beträgt.

9. Verfahren nach einem der vorhergehenden Ansprüche, bei welchem der Einsalzschritt (b) bei Umgebungstemperatur durchgeführt wird.

10. Verfahren nach einem der vorhergehenden Ansprüche, bei welchem der Fisch Schellfisch (saithe) ist.

## Revendications

1. Procédé de préparation d'un produit de poisson en tranches comprenant :
a) la congélation de filets de poisson appartenant à la famille des Gadus en un bloc de forme uniforme, la peau des filets de poisson étant enlevée en profondeur avant la congélation en blocs ;
b) le salage du bloc de façon à obtenir une concentration en sel de 22 à 26% dans l'eau des cellules de poisson ;
c) le tranchage ; et
d) le déssalage des tranches de poisson jusqu'à une concentration en sel de 8 à 10%.

2. Procédé selon la revendication 1, dans lequel les tranches de poisson sont en outre colorées.

3. Procédé selon la revendication 1 ou 2, dans lequel les tranches de poisson sont en outre fumées.

4. Procédé selon la revendication 1 ou 2, dans lequel les stades de déssalage et de coloration sont effectués simultanément.

5. Procédé selon l'une quelconque des revendications précédentes, dans lequel les tranches de poisson sont déssalées jusqu'à une concentration en sel de 8 à 9%.

6. Procédé selon l'une quelconque des revendications précédentes, dans lequel les tranches de poisson sont déssalées jusqu'à une concentration en sel d'environ 8%.

7. Procédé selon l'une quelconque des revendications précédentes, dans lequel on congèle les filets de poisson dont on a enlevé la peau en profondeur de façon à orienter les filets dans la même direction.

8. Procédé selon l'une quelconque des revendications précédentes, dans lequel le rapport du poisson au sel utilisé au cours du stade de salage (b) est environ 1:2.

9. Procédé selon l'une quelconque des revendications précédentes, dans lequel le stade de salage (b) est effectué à température ambiante.

10. Procédé selon l'une quelconque des revendications précédentes, dans lequel le poisson est un colin.
